# EUROPÄISCHE PATENTANMELDUNG

(11) **EP 4 657 693 A1**
(43) Veröffentlichungstag der Anmeldung: **03.12.2025**
(21) Anmeldenummer: 24178547.6
(22) Anmeldetag: 28.05.2024
(51) Int. Cl.: H02J 3/14

(54) **VERFAHREN UND VORRICHTUNG ZUM ÜBERTRAGEN ELEKTRISCHER ENERGIE AN EINEN VERBRAUCHER**

(71) Anmelder: FRONIUS INTERNATIONAL GmbH, 4643 Pettenbach (AT)
(72) Erfinder: Brandstätter, Stefan, 4643 Pettenbach (AT); Klinglmayr, Clemens, 4643 Pettenbach (AT)
(74) Vertreter: SONN Patentanwälte GmbH & Co KG

(57) **Zusammenfassung**

Die Erfindung betrifft ein Verfahren zum Übertragen elektrischer Energie (E) an einen Verbraucher (1) über eine elektrische Steckverbindung (2) mit den Schritten:
i) Übertragen der elektrischen Energie (E) an den Verbraucher (1) über die Steckverbindung (2);
ii) Erfassen der elektrischen Energie (E), die während eines mit der Zeit fortschreitenden Erfassungszeitfensters (14) über die Steckverbindung (2) an den Verbraucher (1) übertragen wird; und
iii) Anpassen, insbesondere Steuern und/oder Regeln, einer elektrischen Größe, insbesondere eines elektrischen Stromes (I), der über die Steckverbindung (2) fließt, gemäß einer Sollvorgabe (R) während eines an das Erfassungszeitfenster (14) vorzugsweise anschließenden Regulierungszeitfensters (15), wobei die Sollvorgabe (R) in dem Regulierungszeitfensters (15) derart eingestellt wird, dass die während eines insbesondere mit der Zeit fortschreitenden Beobachtungszeitfensters (16) übertragene elektrische Energie (E) höchstens einer vorgegebenen maximalen elektrischen Gesamtenergie (Eₘₐₓ) entspricht.

Des Weiteren betrifft die Erfindung eine Vorrichtung (51) zum Übertragen elektrischer Energie (E) an einen Verbraucher (1).

## Beschreibung

Die Erfindung betrifft ein Verfahren zum Übertragen elektrischer Energie an einen Verbraucher über eine elektrische Steckverbindung.

Des Weiteren betrifft die Erfindung ein Verfahren zum Laden eines Energiespeichers sowie eine Vorrichtung zum Übertragen elektrischer Energie an einen Verbraucher, wobei die Vorrichtung über eine Steckverbindung mit einem übergeordneten Energieversorgungsnetz verbindbar ist.

Mit Hilfe von elektrischen Steckverbindungen können Verbraucher mit einem elektrischen (Schalt-)kreis, beispielsweise einem übergeordneten elektrischen Energieversorgungsnetz, elektrisch verbunden werden. Zu diesem Zweck wird ein erstes Element, meist ein männlicher Stecker, in ein zweites Element, meist eine weibliche Steckdose oder Kupplung, gesteckt, sodass die jeweiligen elektrischen Kontakte der beiden Elemente elektrisch verbunden und mechanisch fixiert werden. Steckverbindungen ermöglichen daher in der Regel sowohl eine elektrische, als auch eine mechanische Verbindung zwischen dem ersten und dem zweiten Element. Die Verbindung zwischen dem ersten und dem zweiten Element ist in vielen Fällen werkzeuglos herstellbar und auch werkzeuglos wieder trennbar. Mithilfe von Steckverbindungen können beispielsweise elektrische Geräte mit dem elektrischen Energieversorgungsnetz verbunden werden. Ein Beispiel für solche Geräte sind Ladegeräte für Energiespeicher, die mithilfe von Steckverbindungen an das Energieversorgungsnetz angeschlossen werden können. Mithilfe der Steckverbindung kann elektrische Energie aus dem Energieversorgungsnetz entnommen und über das Ladegerät an den Energiespeicher übertragen werden.

Aus dem Stand der Technik ist eine Vielzahl an unterschiedlichen elektrischen Steckverbindungen bekannt. Viele Steckverbindungen sind hinsichtlich der Abmessungen, der Polanzahl, der Polanordnung und der elektrischen Spezifikationen durch Standards genormt. Dadurch wird gewährleistet, dass Geräte unterschiedlicher Hersteller miteinander kompatibel oder mit dem Energieversorgungsnetz verbindbar sind. Andere Steckverbindungen sind wiederum herstellerspezifische Steckverbindungen, die auch als proprietäre Steckverbindungen bezeichnet werden und meist nur innerhalb des Ökosystems eines Herstellers verwendet werden. Ein Beispiel für genormte Steckverbindungen sind beispielsweise die vorwiegend in Europa verbreiteten dreipoligen Schutzkontaktsteckverbindungen (Abkürzung: Schuko-Steckverbindung), die jeweils einen Schutzkontaktstecker, als auch eine Schutzkontaktsteckdose bzw. eine Schutzkontaktkupplung umfassen.

Allen Steckverbindungen ist gemein, dass diese in elektrischer Hinsicht nur bis zu einer bestimmten Grenze elektrisch belastbar sind. Insbesondere kann die elektrische Leistung oder der übertragene elektrische Strom bzw. die anliegende elektrische Spannung nicht beliebig hoch gewählt werden, da andernfalls die Steckverbindung beschädigt und dadurch die Sicherheit für die angeschlossenen Geräte und die Personen in der Umgebung nicht mehr gewährleistet werden kann. Für Steckverbindungen, insbesondere genormte Steckverbindungen, existieren daher Grenzwerte für Spannungen, Ströme, Leistungen und/oder übertragene elektrische Energien. In vielen Fällen stellen aber kurzzeitige Überschreitungen der vorgegebenen Grenzwerte kein Problem dar und führen zu keiner Beeinträchtigung der Sicherheit oder der Steckverbindung selbst, sodass für manche Steckverbindungen Grenzwerte sowohl für dauerhafte Belastungen, als auch Grenzwerte für kurzzeitige Belastungen vorgesehen sind. (Aktive) elektrische Verbraucher treffen hierbei jedoch in der Regel keine Unterscheidung, sondern begrenzen die elektrische Leistung, den elektrischen Strom und/oder die elektrische Spannung statisch mit den niedrigsten vorgegebenen Grenzwerten, um jegliche Überbelastung einer Steckverbindung bzw. eine Überschreitung von Grenzwerten in jeder Betriebssituation ausschließen zu können. Nachteiligerweise kann dadurch jedoch in bestimmten Betriebssituationen, in denen beispielsweise nur kurzzeitig ein höherer Strom bzw. eine höhere elektrische Leistung benötigt wird, der volle Strom bzw. die volle Leistung nicht abgerufen werden, obwohl dies theoretisch möglich und mit den erlaubten Grenzwerten für die elektrischen Größen vereinbar wäre.

In Anbetracht dieser Ausführungen ist es Aufgabe der vorliegenden Erfindung, die Nachteile des Standes der Technik zu lindern oder gar gänzlich zu beseitigen. Vorzugsweise ist es Aufgabe der vorliegenden Erfindung, ein Verfahren bzw. eine Vorrichtung zum Übertragen elektrischer Energie an einen Verbraucher zur Verfügung zu stellen, bei denen das Energieübertragungspotential einer Steckverbindung, insbesondere einer Schutzkontaktsteckverbindung, innerhalb der vorgegebenen Grenzwerte einer Steckverbindung besser ausgenutzt werden kann.

Gelöst wird diese Aufgabe durch ein Verfahren zum Übertragen elektrischer Energie an einen Verbraucher nach Anspruch 1, ein Verfahren zum Laden eines Energiespeichers nach Anspruch 13 und eine Vorrichtung zum Übertragen elektrischer Energie nach Anspruch 14.

Gemäß Anspruch 1 weist ein Verfahren zum Übertragen elektrischer Energie an einen Verbraucher über eine elektrische Steckverbindung folgende Schritte auf:
i) Übertragen der elektrischen Energie an den Verbraucher über die Steckverbindung;
ii) Erfassen der elektrischen Energie, die während eines mit der Zeit fortschreitenden Erfassungszeitfensters über die Steckverbindung an den Verbraucher übertragen wird; und
iii) Anpassen, insbesondere Steuern und/oder Regeln, einer elektrischen Größe, insbesondere eines elektrischen Stromes, der über die Steckverbindung fließt, gemäß einer Sollvorgabe während eines an das Erfassungszeitfenster vorzugsweise anschließenden Regulierungszeitfensters, wobei die Sollvorgabe in dem Regulierungszeitfensters derart eingestellt wird, dass die während eines insbesondere mit der Zeit fortschreitenden Beobachtungszeitfensters übertragene elektrische Energie höchstens einer vorgegebenen maximalen elektrischen Gesamtenergie entspricht. Mit dem erfindungsgemäßen Verfahren können bei Steckverbindungen die Vorgaben in Bezug auf übertragene Energiemengen innerhalb von vorgegebenen Zeiträumen eingehalten werden, ohne die Energieübertragung über Gebühr einzuschränken. Die Sollvorgabe kann dabei, aber muss selbstverständlich nicht so eingestellt werden, dass die übertragene elektrische Energie der maximalen elektrischen Gesamtenergie entspricht. Wichtig ist nur, dass die während des Beobachtungszeitfensters übertragene elektrische Energie die vorgegebene maximale elektrische Gesamtenergie nicht überschreitet und die Sollvorgabe dahingehend angepasst wird. Die Sollvorgabe wird daher derart vorgegeben, dass die während des Beobachtungsfensters übertragene Energie nicht größer ist als die vorgegebene maximale elektrische Gesamtenergie. Die Sollvorgabe kann unter Berücksichtigung der vorgegebenen maximalen elektrischen Gesamtenergie im Wesentlichen frei vorgegeben werden. Insbesondere kann die Sollvorgabe an den Verbraucher und dessen Erfordernisse, Bedürfnisse oder Bedingungen angepasst sein. Wenn beispielsweise eine Kommunikation mit dem Verbraucher möglich ist, kann die Sollvorgabe an einen oder mehrere vom Verbraucher ausgegebene Parameter angepasst sein. Wenn beispielsweise der Verbraucher ein an ein Ladegerät angeschlossener Energiespeicher ist, kann die Sollvorgabe an eine durch zumindest einen elektrischen Parameter definierte Ladekurve des Energiespeichers angepasst werden. Die Sollvorgabe kann beispielsweise einen Ladestrom und/oder eine Ladespannung vorgeben. Dadurch wird auch indirekt die an der Steckverbindung übertragene Energie eingestellt. Bei dem Energiespeicher kann es sich beispielsweise um einen Lithium-Ionen Akkumulator oder einen Blei-Akkumulator handeln. Beispiele für Lithium-Ionen Akkumulatoren sind LFP-, LTO-, NMC-, NCA-, NCO-, LMO- oder LCO-Akkumulatoren. Beispiele für Blei-Akkumulatoren sind PzS-, GiS-, PzV-, GiV- oder CSM-Akkumulatoren. Beispiele für Lead Crystal Akkumulatoren sind- EVFJ-, CNFJ- oder NiCd-Akkumulatoren. Die anzupassende elektrische Größe kann durch eine Regulierungseinheit angepasst werden. Die Anpassung kann insbesondere durch eine Steuerung und/oder Regelung erfolgen. Die Anpassung kann direkt oder indirekt vorgenommen werden, beispielsweise indem ein vom Ladegerät an den Energiespeicher ausgegebener Ladestrom und/oder eine vom Ladegerät ausgegebene Ladespannung gemäß der Sollvorgabe angepasst wird, was dazu führt, dass auch ein in das Ladegerät fließender elektrischer Strom und damit die über die Steckverbindung übertragene Energie angepasst wird. Bei der elektrischen Größe kann es sich beispielsweise um einen elektrischen Strom und/oder um eine elektrische Spannung handeln. Bei einer Ausführungsform ist die elektrische Größe ein durch die Steckverbindung fließender Strom, welcher gemäß der Sollvorgabe angepasst wird. Bei einer bevorzugten Ausführungsform der Erfindung ist der Verbraucher ein Energiespeicher und die elektrische Größe ist ein Ladestrom und/oder eine Ladespannung für einen Energiespeicher, der/die gemäß der Sollvorgabe angepasst wird/werden. Durch die Anpassung der Ladespannung bzw. des Ladestroms wird auch der Strom durch die Steckverbindung angepasst. Mit anderen Worten kann durch Anpassung des Ladestroms und/oder der Ladespannung auch die über die Steckverbindung übertragene Energie reguliert werden. Die Schritte i), ii) und/oder iii) können zumindest teilweise überlappend bzw. gleichzeitig, d.h. zeitlich parallel, durchgeführt werden. Die Steckverbindung umfasst vorzugsweise ein erstes Steckelement und ein zweites Steckelement. Durch die Steckverbindung wird ein elektrischer und ein mechanischer Kontakt zwischen den Steckelementen hergestellt. Das erste und das zweite Steckelement sind vorzugsweise werkzeuglos miteinander verbindbar und/oder werkzeuglos voneinander trennbar. Das erste Steckelement kann als elektrischer Stecker ausgebildet sein. Das zweite Steckelement kann als elektrische Steckdose oder als elektrische Kupplung ausgebildet sein. Bevorzugt ist das erste Steckelement ein Schutzkontaktstecker und das zweite Element eine Schutzkontaktsteckdose oder eine Schutzkontaktkupplung. Bei dem Schutzkontaktstecker kann es sich um einen Schutzkontaktstecker nach CEE 7/4 handeln (CEE = Commission on the Rules for the Approval of the Electrical Equipment). Dieser Schutzkontaktstecker ist auch als Typ F Schutzkontaktstecker bekannt. Bei der Schutzkontaktsteckdose kann es sich um eine Schutzkontaktsteckdose nach CEE 7/3 handeln. Die Steckverbindung, insbesondere der Schutzkontaktstecker und/oder die Schutzkontaktsteckdose, kann beispielsweise hinsichtlich geometrischer Dimensionen und/oder elektrischer Spezifikationen genormt sein. Nach dem Herstellen der elektrischen Steckverbindung bzw. Zusammenführen des ersten und des zweiten Steckelements wird elektrische Energie in Schritt i) an den Verbraucher übertragen. Die übertragene elektrische Energie kann in Schritt ii) mithilfe einer Messeinrichtung erfasst werden. Beispielsweise kann durch Messen der elektrischen Spannung an der Steckverbindung und des elektrischen Stroms durch die Steckverbindung die elektrische Leistung ermittelt und durch zeitliches Integrieren der elektrischen Leistung die übertragene elektrische Energie in einem Zeitraum, insbesondere während des Erfassungszeitfensters, bestimmt werden. Die übertragene Energie kann insbesondere als zeitlicher Energieverlauf erfasst werden. Das Erfassungszeitfenster erstreckt sich vorzugsweise in die Vergangenheit und reicht bis zur Gegenwart, d.h. bis zum aktuellen Zeitpunkt, der stetig fortschreitet. Das Erfassungszeitfenster kann eine vorgegebene Zeitdauer besitzen, die jedoch einstellbar sein kann. Mit der Zeit fortschreitend bedeutet vorzugsweise, dass das gesamte Erfassungszeitfenster mit der Zeit gleitet, also dessen Anfang und dessen Ende mit der Zeit verschoben wird. Mit der Zeit fortschreitend kann jedoch bei einer Ausführungsform der Erfindung auch bedeuten, dass nur das Ende des Erfassungszeitfensters mit der Zeit fortschreitet. In diesem Fall wächst die Zeitdauer des Erfassungszeitfensters mit der Zeit an. Das Erfassungszeitfenster kann dabei auch nur bis zu einer definierten Zeitdauer anwachsen und anschließend das gesamte Zeitfenster, also auch der Anfang des Erfassungszeitfensters, mit der Zeit gleiten. Dies ist insbesondere zu Beginn des erfindungsgemäßen Verfahrens vorteilhaft. Denkbar ist aber auch, dass das Erfassungszeitfenster immer weiter anwächst und sämtliche Energiewerte aufgezeichnet und gespeichert werden. In Schritt iii) wird die elektrische Größe gemäß einer Sollvorgabe während des Regulierungszeitfensters angepasst, insbesondere gesteuert und/oder geregelt. Die Anpassung der elektrischen Größe kann, erwähnt, direkt oder indirekt erfolgen, beispielsweise indem eine mit der elektrischen Größe in Verbindung stehende weitere elektrische Größe angepasst wird. Bei einer Ausführungsform der Erfindung kann der Verbraucher ein Energiespeicher sein und die elektrische Größe ein von einem Ladegerät ausgegebener Ladestrom und/oder eine Ladespannung sein, welche/r an die Sollvorgabe angepasst wird/werden, was dazu führt, dass auch ein über die Steckverbindung fließender Strom angepasst wird. Das Regulierungszeitfenster schließt vorzugsweise direkt an das Erfassungszeitfenster an und liegt vorzugsweise in der Zukunft. Das Ende des Erfassungszeitfensters und der Anfang des Regulierungszeitfensters können demnach in dem aktuellen, mit der Zeit fortschreitenden Zeitpunkt zusammenfallen. Sowohl das Ende des Erfassungszeitfensters, als auch der Anfang des Regulierungszeitfensters können mit der Zeit fortschreiten. Das Regulierungszeitfenster dient der künftigen Planung des zeitlichen Verlaufs der elektrischen Größe. Das Regulierungszeitfenster weist vorzugsweise eine vorgegebene Zeitdauer auf, die einstellbar ist. Die Zeitdauer des Regulierungszeitfensters kann insbesondere in Abhängigkeit der im Erfassungszeitfenster übertragenen Energie gewählt werden. Das Regulierungszeitfenster kann als Ganzes mit der Zeit fortschreiten. Wenn der Anfang des Regulierungszeitfensters mit der Zeit fortschreitet, das Ende jedoch zumindest vorrübergehend zeitlich festgehalten wird, kann die Zeitdauer des Regulierungszeitfensters auch reduziert werden. Das Regulierungszeitfenster kann auch nur bis zu einer bestimmten, vorgegebenen Zeitdauer reduziert und anschließend das gesamte Regulierungszeitfenster, also sowohl der Anfang, als auch das Ende des Regulierungszeitfensters, mit der Zeit fortschreiten. Das Regulierungszeitfenster kann umgekehrt auch vergrößert werden, indem das Ende des Regulierungszeitfensters weiter in die Zukunft verschoben wird. Das Vergrößern und Reduzieren des Regulierungszeitfensters kann insbesondere in Übergangsphasen, beispielsweise, wenn in jüngster Zeit keine oder nur wenig elektrische Energie über die Steckverbindung übertragen wurde, von Vorteil sein, wie weiter unten näher beschrieben wird. Das Beobachtungsfenster kann mit dem Erfassungszeitfenster und/oder mit dem Regulierungszeitfenster zumindest teilweise überlappen. Das Beobachtungsfenster, insbesondere dessen Anfang und dessen Ende, kann mit der Zeit fortschreiten. Das Beobachtungszeitfenster kann ebenfalls eine einstellbare Zeitdauer aufweisen. Das Beobachtungszeitfenster kann zumindest teilweise in der Vergangenheit und/oder in der Zukunft liegen. Da die Bedingung, wonach die übertragene Energie nicht die vorgegebene maximale Gesamtenergie überschreitet, für das Beobachtungszeitfenster zu jedem Zeitpunkt zu erfüllen ist, ist es für die Erfindung jedoch unerheblich, in welcher zeitlichen Relation das Beobachtungsfenster zu dem Erfassungszeitfenster und zu dem Regulierungszeitfenster steht. Das Beobachtungszeitfenster kann demnach bei einer Umsetzung der Erfindung beispielsweise mit der Erfassungszeitfenster zusammenfallen. In diesem Fall muss die Sollvorgabe derart eingestellt werden, dass zu einem späteren Zeitpunkt, wenn das Beobachtungszeitfenster vorbeigleitet, die vorgegebene maximale Gesamtenergie nicht überschritten wird. Mit anderen Worten wird bei dieser Umsetzung die Sollvorgabe derart in die Zukunft geplant, dass, wenn das Beobachtungszeitfenster später über den vom (aktuellen) Regulierungszeitfenster geplanten Zeitraum vorbeigleitet, die Bedingung, wonach die übertragene Energie die vorgegebene maximale Gesamtenergie nicht überschreitet, erfüllt ist. Möglich ist aber auch, dass das Ende des Beobachtungszeitfensters mit dem Ende des Regulierungszeitfenster zusammenfällt. Bei dieser bevorzugten Umsetzung liegt das Beobachtungszeitfenster zumindest teilweise in der Zukunft und kann sich, wenn das Regulierungszeitfenster kürzer als das Beobachtungszeitfenster ist, auch in die Vergangenheit erstrecken. Die Sollvorgabe in dem Regulierungszeitfenster wird derart eingestellt, dass die übertragene elektrische Energie höchstens der vorgegebenen maximalen elektrischen Gesamtenergie entspricht. Wie bereits erwähnt, kann, aber muss die die übertragene Energie nicht der vorgegebenen maximalen Gesamtenergie entsprechen. Wenn in dem Erfassungs- bzw. Beobachtungszeitfenster bereits eine große Menge an elektrischer Energie übertragen wurde, wird die Sollvorgabe entsprechend angepasst, sodass die die übertragene elektrische Energie die vorgegebenen maximalen elektrischen Gesamtenergie nicht überschreitet. Um die Sollvorgabe in dem Regulierungszeitfenster entsprechend einzustellen, dass die vorgegebene maximale elektrische Gesamtenergie nicht überschritten wird, können vergangene erfasst Werte der über die Steckverbindung übertragenen Energie berücksichtigt werden. Um die übertragene elektrische Energie zu reduzieren, kann beispielsweise ein elektrischer Strom und/oder eine elektrische Spannung reduziert werden. Durch Erhöhen des Stroms und/oder der Spannung kann umgekehrt mehr Energie übertragen werden. Bei der elektrischen Größe kann es sich, wie bereits erwähnt, beispielsweise um einen elektrischen Strom durch die Steckverbindung handeln. Wenn der Verbraucher ein Energiespeicher ist, kann die elektrische Größe aber auch ein Ladestrom und/oder eine Ladespannung sein. Die Reduktion des Ladestroms und/oder der Ladespannung führt aufgrund der verringerten Übertragung von Energie zwischen dem Ladegerät und dem Energiespeicher beispielsweise auch zur Reduktion des Stroms und damit der elektrischen Energie über die Steckverbindung.

Die in dieser Offenbarung angegebenen elektrische Werte stellen, falls nicht anders angegeben, Effektivwerte dar.

Als besonders günstig hat sich herausgestellt, wenn eine Zeitdauer des Beobachtungszeitfensters zwischen 2 Stunden und 4 Stunden, insbesondere im Wesentlichen 3 Stunden, beträgt.

Eine besonders vorteilhafte Variante der Erfindung ergibt sich, wenn das Beobachtungszeitfenster mit dem Erfassungszeitfenster zusammenfällt, insbesondere dem Erfassungszeitfenster entspricht. Das Beobachtungszeitfenster liegt bei dieser Ausführungsform der Erfindung ebenfalls vorzugsweise ausschließlich in der Vergangenheit. Die Sollvorgabe kann in dem Regulierungszeitfenster derart geplant werden, dass die übertragene elektrische Energie in dem später vorbeigleitenden Beobachtungszeitfenster die vorgegebene maximale elektrische Gesamtenergie nicht überschreitet. Für die Planung der Sollvorgabe können demnach vergangene Werte der übertragenen Energie berücksichtigt werden.

Vorzugsweise beträgt eine Zeitdauer des Erfassungszeitfensters zumindest 60 Minuten, vorzugsweise zumindest 120 Minuten oder zumindest 180 Minuten. Günstig ist, wenn die Zeitdauer des Erfassungszeitfensters mindestens so lange ist wie die Zeitdauer des Beobachtungszeitfensters.

In Zeiten, in denen zuvor nur wenig oder gar keine Energie übertragen wurde, kann die Energieübertragung länger in die Zukunft geplant werden, ohne die vorgegebene maximale elektrische Gesamtenergie in dem Beobachtungszeitfenster zu überschreiten. Deshalb ist es günstig, wenn eine Zeitdauer des Regulierungszeitfensters variabel einstellbar ist. Somit kann in Zeiten, in denen zuvor, beispielsweise 3 Stunden zuvor, keine elektrische Energie übertragen worden ist, das Regulierungszeitfenster verlängert, beispielsweise auf 3 Stunden verlängert, werden.

Die Zeitdauer des Regulierungszeitfensters kann in Abhängigkeit der übertragenen Energie im Erfassungszeitfenster gewählt werden. Als besonders vorteilhaft hat sich herausgestellt, wenn eine Zeitdauer des Regulierungszeitfensters zwischen 0 Minuten und 180 Minuten, vorzugsweise zwischen 30 Minuten und 90 Minuten oder zwischen 45 Minuten und 75 Minuten, insbesondere im Wesentlichen 60 Minuten, beträgt.

Bei einer Ausführungsform der Erfindung hat es sich als vorteilhaft erwiesen, wenn das Regulierungszeitfenster zumindest 10 Minuten, zumindest 30 Minuten oder zumindest 1 Stunde beträgt.

Bei einer Ausführungsform der Erfindung ist die Sollvorgabe eine zeitliche Sollkurve, welche vorzugsweise durch zumindest einen elektrischen Parameter bestimmt ist, welcher Parameter insbesondere durch den Verbraucher vorgegeben ist. Bei dem zumindest einen elektrischen Parameter kann es sich beispielsweise um einen Parameter für einen elektrischen Strom, für eine elektrische Spannung, für eine elektrische Leistung und/oder für eine elektrische Energie handeln. Wenn der Verbraucher beispielsweise ein elektrischer Energiespeicher ist, kann der Parameter beispielsweise ein Parameter für eine Ladekurve sein oder aus dem Parameter eine Ladekurve ableitbar sein. Es können auch mehrere Parameter vom Verbraucher vorgegeben werden.

Um die Steckverbindung nicht zu überbelasten, ist es vorteilhaft, wenn die vorgegebene maximale elektrische Gesamtenergiemenge zwischen 6000 Wh und 9000 Wh, vorzugsweise zwischen 6500 Wh und 8000 Wh oder zwischen 7200 Wh und 7500 Wh, insbesondere im Wesentlichen 7360 Wh, beträgt.

Bei einer Ausführungsform der Erfindung ist vorgesehen, dass die Sollvorgabe höchstens einen vorgegebenen Maximalwert annimmt. Mit anderen Worten wird die elektrische Größe zusätzlich hinsichtlich ihrer Höhe beschränkt. Der Maximalwert kann auch zeitabhängig sein und variieren. Die elektrische Größe muss selbstverständlich nicht den Maximalwert annehmen. Die elektrische Größe kann, unter Berücksichtigung der vorgegebenen maximalen Gesamtenergie, sämtliche Werte unterhalb des Maximalwerts annehmen. Bei einer Ausführungsform der Erfindung handelt es sich bei der elektrischen Größe um einen elektrischen Strom durch die Steckverbindung. In diesem Fall ist es günstig, wenn der vorgegebene Maximalwert insbesondere im Wesentlichen zwischen 10 Ampere und 16 Ampere beträgt. Beispielsweise kann der vorgegebene Maximalwert 10 A, 11 A, 12 A, 13 A, 14 A, 15 A oder 16 A (A für Ampere) betragen. Bei den angegebenen Werten handelt es sich vorzugsweise um Effektivwerte. Wenn die Sollvorgabe eine mit dem elektrischen Strom durch die Steckverbindung in Verbindung stehende elektrische Größe betrifft, beispielsweise einen Ladestrom oder eine Ladespannung, kann der Maximalwert auch so gewählt werden, dass der Strom durch die Steckverbindung die obigen Werte nicht überschreitet.

Bei einer Variante der Erfindung kann vorgesehen sein, dass die während des Regulierungszeitfensters an den Verbraucher übertragene elektrische Energie und/oder eine elektrische Leistung maximiert wird. Dabei kann auch zumindest ein Parameter des Verbrauchers berücksichtigt werden, um den Verbraucher nicht zu überbelasten. Insbesondere kann, wenn der Verbraucher ein Energiespeicher ist, eine durch zumindest einen Parameter vorgegebene Ladekurve bei der Maximierung der übertragenen elektrischen Energie bzw. Leistung berücksichtigt werden. Bei der Maximierung der übertragenen elektrischen Energie und/oder der elektrischen Leistung kann des Weiteren auch der Maximalwert der Sollvorgabe berücksichtigt werden. Durch die Maximierung der elektrischen Leistung und/oder der elektrischen Energie kann beispielsweise ein Energiespeicher - gegebenenfalls unter Berücksichtigung zumindest eines Parameters, insbesondere eines Parameters für eine Ladekurve bzw. aus dem eine Ladekurve ableitbar ist - schnell geladen werden.

Vorteilhaft ist, wenn der Verbraucher ein Energiespeicher, insbesondere ein Lithium-Ionen Akkumulator, ist und die Sollvorgabe, insbesondere eine Sollkurve, derart eingestellt wird, dass sie sich einer vorgegebenen Ladekurve zur Ladung des Energiespeichers annähert, insbesondere dieser Wesentlichen entspricht. Wenn die Sollvorgabe einen Ladestrom und/oder eine Ladespannung vorgibt, wird dadurch indirekt auch die über die Steckverbindung übertragene Energie eingestellt. Die Ladekurve kann durch zumindest einen Parameter des Energiespeichers definiert werden oder aus diesem abgeleitet werden. Die Sollkurve kann der Ladekurve soweit angenähert werden, als dies die vorgegebene maximale Gesamtenergie oder allenfalls der Maximalwert der Sollvorgabe zulässt. Wenn die vorgegebene maximale Gesamtenergie und gegebenenfalls der Maximalwert es zulässt, kann die Sollvorgabe der Ladekurve entsprechen.

Bei einer Ausführungsform der Erfindung kann vorgesehen sein, dass der Verbraucher ein Energiespeicher, insbesondere ein Lithium-Ionen Akkumulator, ist und ein Ladeplan zur Ladung des Energiespeichers erstellt wird, gemäß dem die Sollvorgabe eingestellt wird. Der Ladeplan kann insbesondere ein zeitlicher Ladeplan sein. Der Ladeplan kann beispielsweise berücksichtigen, dass die abrufbare elektrische Leistung aktuell beschränkt ist, da in den letzten Stunden sehr viel Energie über die Steckverbindung übertragen wurde. Der Ladeplan kann vorsehen, dass mit der Ladung zugewartet wird, bis wieder mehr Energie bzw. Leistung übertragen werden kann, ohne in dem Beobachtungsfenster die vorgegebene maximale Gesamtenergie zu überschreiten.

Die oben beschriebene Aufgabe wird auch durch ein Verfahren zum Laden eines Energiespeichers, insbesondere eines Energiespeichers eines Fahrzeugs, gelöst. Dabei wird der Energiespeicher über eine Steckverbindung mit elektrischer Energie geladen und das Verfahren zum Übertragen elektrischer Energie an einen Verbraucher der oben beschriebenen Art angewandt.

Die oben beschriebene Aufgabe wird weiters durch eine Vorrichtung zum Übertragen elektrischer Energie an einen Verbraucher gelöst. Die Vorrichtung ist über eine Steckverbindung mit einem übergeordneten Energieversorgungsnetz verbindbar ist und weist folgendes auf:
eine Erfassungseinheit, welche dazu eingerichtet ist, die elektrischen Energie zu erfassen, die während eines mit der Zeit gleitenden Erfassungszeitfensters an der Steckverbindung übertragen wird;
eine Regulierungseinheit, insbesondere Steuerungs- und/oder Regelungseinheit, welche dazu eingerichtet ist, eine elektrische Größe, insbesondere einen elektrischen Strom, der über die Steckverbindung fließt, gemäß einer Sollvorgabe während eines an das Erfassungszeitfenster anschließenden Regulierungszeitfensters anzupassen, insbesondere zu steuern und/oder regeln, wobei die Steuerungs- und/oder Regelungseinheit weiters dazu eingerichtet ist, die Sollvorgabe in dem Regulierungszeitfensters derart einzustellen, dass die während eines mit der Zeit fortschreitenden Beobachtungszeitfensters übertragene elektrische Energie höchstens einer vorgegebenen maximalen elektrischen Gesamtenergie entspricht.

Die oben in Zusammenhang mit dem Verfahren zum Übertragen elektrischer Energie an einen Verbraucher beschriebenen Vorteile, Effekte und Merkmale sind auf die Vorrichtung zum Übertragen elektrischer Energie übertragbar. Die Erfassungseinheit kann bei einer Ausführungsform der Erfindung dazu ausgebildet sein, einen elektrischen Strom durch die Steckverbindung und eine elektrische Spannung an der Steckverbindung direkt oder indirekt zu messen. Aus den gemessenen Größen kann eine elektrische Leistung und durch zeitliche Integration die über die Steckverbindung übertragene elektrische Energie bestimmt werden. Die Erfassungseinheit kann bei einer Ausführungsform der Erfindung als eigenständige Einheit ausgebildet sein. Bei einer anderen Ausführungsform kann die Erfassungseinheit innerhalb eines Gehäuses der Vorrichtung angeordnet sein. Die Regulierungseinheit kann einen Mikroprozessor aufweisen. Wenn der Verbraucher als Energiespeicher ausgebildet ist, kann die Regulierungseinheit dazu ausgebildet sein, einen Ladestrom und/oder eine Ladespannung anzupassen.

Die Vorrichtung kann bei einer Ausführungsform der Erfindung als Ladegerät zum Laden eines Energiespeichers, insbesondere eines Energiespeichers in einem Fahrzeug, ausgebildet sein. Bei dem Fahrzeug kann es sich beispielsweise um ein elektrisch angetriebenes Fahrzeug bzw. Flurförderfahrzeug handeln, wobei der Energiespeicher zur Energieversorgung eines Antriebs für das Fahrzeug dient. Wenn die Vorrichtung als Ladegerät ausgebildet ist, ist die elektrische Größe vorzugsweise ein Ladestrom und/oder eine Ladespannung, deren Steuerung bzw. Regelung sich auch auf die übertragene Energie auswirkt. Durch Anpassen des Ladestroms bzw. der Ladespannung kann somit auch an der Steckverbindung übertragene Energie gesteuert und/oder geregelt werden. Erfassungseinheit kann innerhalb eines Gehäuses oder an einem Gehäuse des Ladegeräts ein- bzw. angefügt sein. Die Erfassungseinheit kann bei dieser Ausführungsform der Erfindung die elektrische Spannung an der Steckverbindung durch Messen einer Eingangsspannung an einem elektrischen Eingang des Ladegeräts erfassen, wenn der elektrische Eingang insbesondere direkt mit der Steckverbindung über ein Zuleitungskabel verbunden ist. In diesem Fall kann auch der elektrische Strom durch die Steckverbindung durch Messen eines Eingangsstromes des Ladegeräts erfasst werden, sofern keine weiteren elektrischen Geräte mit der Steckverbindung verbunden sind, da der elektrische Strom durch die Steckverbindung zwangsläufig auch durch in den Eingang des Ladegeräts fließt. Bei einer weiteren Ausführungsform der Erfindung kann vorgesehen sein, dass ein Ladestrom und eine Ladespannung für den Energiespeicher erfasst werden und daraus durch Berechnung der elektrischen Leistung und zeitliche Integration die übertragene elektrische Energie ermittelt wird. Die an den Energiespeicher übertragene elektrische Energie entspricht im Wesentlichen, bis auf vernachlässigbare Verluste und die für die Steuerung bzw. Regelung des Ladegeräts erforderliche elektrische Energie, der über die Steckverbindung übertragenen elektrischen Energie. Mit anderen Worten kann durch Erfassen der Ladeleistung und der Ladeenergie auch die an der Steckverbindung übertragene Leistung und Energie ermittelt werden.

Nachfolgend wird die Erfindung anhand von Ausführungsbeispielen näher beschrieben, auf die sie jedoch nicht beschränkt sein soll. Es zeigen:
Fig. 1 schematisch einen Verbraucher in Form eines Energiespeichers, der mit einem Ladegerät verbunden ist, das über eine Steckverbindung mit elektrischer Energie versorgt wird;
Fig. 2A einen schematischen zeitlichen Stromverlauf bei einem Verfahren zum Übertragen elektrischer Energie an einen Verbraucher aus dem Stand der Technik gemäß einer ersten Variante;
Fig. 2B einen schematischen zeitlichen Stromverlauf bei einem Verfahren zum Übertragen elektrischer Energie an einen Verbraucher aus dem Stand der Technik gemäß einer zweiten Variante;
Fig. 3A einen schematischen zeitlichen Stromverlauf bei einem erfindungsgemäßen Verfahren zum Übertragen elektrischer Energie an einen Verbraucher;
Fig. 3B eine alternative Ausführungsform des erfindungsgemäßen Verfahrens, wobei der schematische Stromverlauf jenem aus Fig. 3A entspricht;
Fig. 4A einen weiteren schematischen zeitlichen Stromverlauf bei einem erfindungsgemäßen Verfahren zum Übertragen elektrischer Energie an einen Verbraucher;
Fig. 4B eine alternative Ausführungsform des erfindungsgemäßen Verfahrens, wobei der schematische Stromverlauf jenem aus Fig. 4A entspricht.

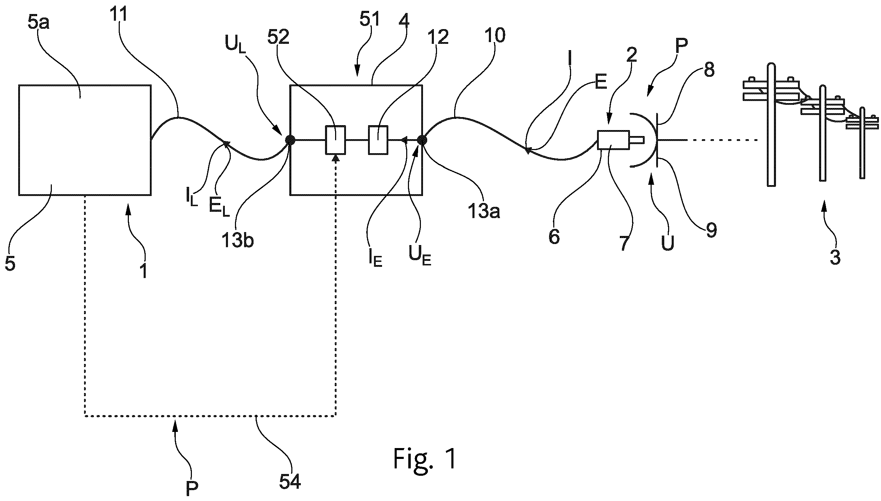

Fig. 1 zeigt einen Verbraucher 1 in Form eines Energiespeichers 5, der mit einem Ladegerät 4 verbunden ist. Über eine Steckverbindung 2 ist das Ladegerät 4 an ein Energieversorgungsnetz 3 mit beispielsweise einer Versorgungsspannung von 230 V (sowie der erlaubten Toleranzen) angeschlossen, sodass elektrische Energie E über das Ladegerät 4 in den Energiespeicher 5 geladen werden kann. Das Ladegerät 4 selbst bildet somit eine Vorrichtung 51 zum Übertragen von elektrischer Energie E an einen Verbraucher 1. Die Steckverbindung 2 weist einen Stecker 6 in Form eines Schutzkontaktsteckers 7 sowie eine Steckdose 8 in Form einer Schutzkontaktsteckdose 9 auf. Der Stecker 6 ist werkzeuglos lösbar mit der Steckdose 8 verbunden. Über eine Zuleitung 10 ist das Ladegerät 4 mit dem Stecker 6 verbunden. Das Ladegerät 4 ist wiederum über eine ebenfalls werkzeuglos lösbare Verbindungsleitung 11, welche zweipolig ausgeführt sein kann, mit dem Energiespeicher 5 verbunden. Der Energiespeicher 5 kann als Lithium-Ionen Akkumulator 5a ausgebildet sein. Über eine drahtlose oder kabelgebundene Datenkommunikationsverbindung 54 können Daten, insbesondere elektrische Parameter, zwischen dem Ladegerät 4 und dem Energiespeicher 5 übermittelt werden. Der Energiespeicher 5 kann beispielsweise ein Energiespeicher eines elektrisch angetriebenen Fahrzeugs (nicht gezeigt) sein und den Antrieb des Fahrzeugs mit elektrischer Energie versorgen.

An der Steckverbindung 2 liegt eine elektrische Wechselspannung U an, welche typischerweise im Wesentlichen 230 V beträgt. Des Weiteren fließt ein elektrischer Strom I über die Steckverbindung 2. Die Spannung U und der Strom I können bei einer nicht gezeigten Ausführungsform direkt an der Steckverbindung 2 gemessen werden. Bei einer weiteren Ausführungsform der Erfindung könnend die Spannung U und der Strom I mithilfe einer Erfassungseinheit 12 im oder am Ladegerät 4 gemessen werden. Die an einem Eingang 13a des Ladegeräts 4 gemessene Eingangsspannung U_{E} entspricht in der gezeigten Darstellung im Wesentlichen der an der Steckverbindung 2 anliegenden elektrischen Spannung U. Der an dem Eingang 13a fließende Eingangsstrom I_{E} entspricht im Wesentlichen dem durch die Steckverbindung fließenden Strom I. Aus der elektrischen Spannung U bzw. der Eingangsspannung U_{E} und dem elektrischen Strom I bzw. dem Eingangsstrom I_{E} kann eine an der Steckverbindung 2 übertragene Leistung P ermittelt werden. Durch zeitliches Integrieren der Leistung P kann eine über die Steckverbindung 2 übertragene Energie E ermittelt werden.

Bei einer weiteren Ausführungsform der Erfindung kann zusätzlich oder alternativ eine Ladespannung U_{L}, insbesondere eine Gleichspannung, und ein Ladestrom I_{L}, insbesondere ein Gleichstrom, an einem Ausgang 13b des Ladegeräts 4 ermittelt werden, welcher durch eine Regulierungseinheit 52, insbesondere eine Steuerungs- und/oder Regelungseinheit, eingestellt, insbesondere gesteuert und/oder geregelt, werden kann. Durch Multiplikation des Ladestroms I_{L} mit der Ladespannung U_{L} kann eine Ladeleistung P_{L} ermittelt werden, aus welcher wiederum durch zeitliches Integrieren eine Ladeenergie E_{L} ermittelt werden kann. Aufgrund der Energiebilanz der Vorrichtung 51 entspricht die an der Steckverbindung 2 übertragene elektrische Energie E im Wesentlichen der Ladeenergie E_{L}, mit Ausnahme von vernachlässigbaren Verlusten bzw. vernachlässigbarer Energie zum Steuern bzw. Regeln des Ladegeräts 4. Somit kann die elektrische Energie E an der Steckverbindung 2 auch durch Ermitteln der Ladeenergie E_{L} erfasst werden.

Steckverbindungen 2 sind typischerweise Grenzwerte zugeordnet, um Beschädigungen zu vermeiden und die Sicherheit zu gewährleisten. Meist liegen für unterschiedliche elektrische Größen, wie Strom, Spannung, Leistung und/oder Energie, unterschiedliche Grenzwerte vor. Die Grenzwerte können auch zeitabhängig sein und voneinander abhängig sein. Aus dem Stand der Technik ist für elektrische Anwendungen bekannt, beispielsweise für den Strom I und die Spannung U die niedrigsten Grenzwerte für sämtliche Betriebssituationen heranzuziehen, um in allen Betriebssituationen eine mögliche Überschreitung der Grenzwerte sowie eine mögliche Energie-Überbelastung der Steckverbindung 2 zu vermeiden.

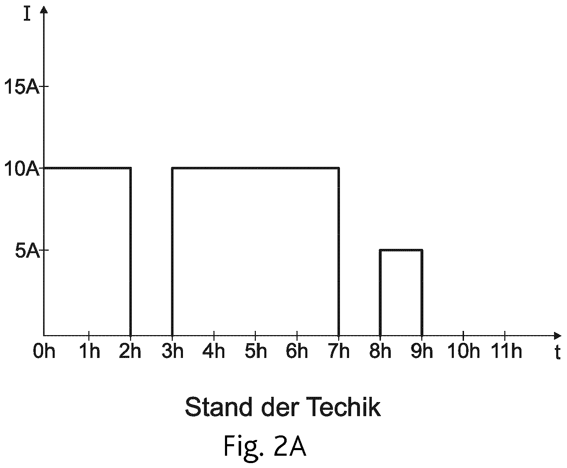

Eine solche Situation ist in Fig. 2A dargestellt. Fig. 2A zeigt einen zeitlichen Stromverlauf in einem Diagramm gemäß einem Verfahren aus dem Stand der Technik. Die Abszisse des Diagramms bildet die Zeit t in Stunden ab. Die Ordinate des Diagramms bildet den Strom I ab, der an einer Steckverbindung 2 in Ampere übertragen wird. Um mögliche Energie-Überbelastungen der Steckverbindung 2 zu vermeiden, wird der Strom I unabhängig von der jeweiligen Betriebssituation auf 10 A begrenzt. Die in drei Stunden übertragbare elektrische Energie wird dabei bei einer Spannung U von 230 V auf im Wesentlichen 6,9 kWh begrenzt. Erkennbar ist in Fig. 2A, dass für zwei Stunden durchgehend 10 A übertragen werden. Nach einer Pause von einer Stunde wird erneut für 4 Stunden ein Strom von 10 Ampere übertragen. Anschließend werden für eine Stunde 5 Ampere übertragen. Nachteiligerweise wird bei diesem Verfahren die übertragbare Energie E begrenzt. Bei Steckverbindungen 2, welche als Schutzkontaktsteckdosen gemäß Typ F ausgebildet sind, können aber kurzfristige höhere elektrische Ströme I bzw. höhere elektrische Leistungen P unschädlich für die Steckverbindung 2 sein, wenn sie zeitlich begrenzt sind. Theoretisch wäre es daher möglich und zulässig, bei Schutzkontaktsteckverbindungen für kürzere Zeiträume höhere Ströme I und damit höhere elektrische Leistungen P und höhere elektrische Energien E zu übertragen. Mit dem in Fig. 2A dargestellten Verfahren aus dem Stand der Technik ist dies jedoch nicht möglich.

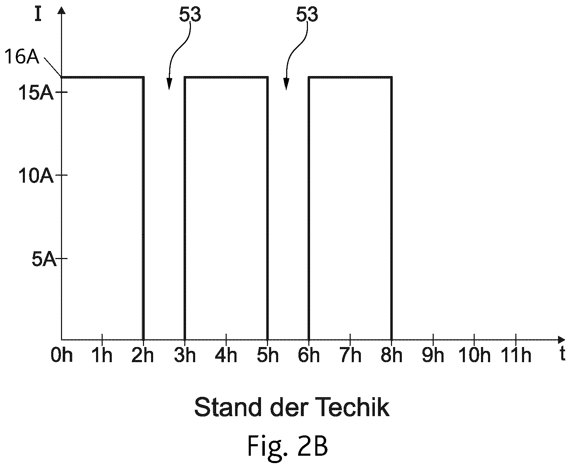

Dem Bedürfnis nach höheren Strömen wird das Verfahren aus dem Stand der Technik nach Fig. 2B gerecht. Fig. 2B zeigt eine weitere Methode aus dem Stand der Technik, um Energie E über eine Steckverbindung 2 zu übertragen. Diese Variante ermöglicht es, für kurze Zeiträume einen höheren elektrischen Strom I und damit mehr elektrische Energie E zu übertragen, erfordert jedoch eine anschließende Übertragungspause 53 von mindestens einer Stunde für den Strom I bzw. die Energie E, bei der aus Sicherheitsgründen keine elektrische Energie E mehr über die Steckverbindung 2 übertragen wird. Fig. 2B zeigt ebenfalls einen beispielhaften Stromverlauf in einem Zeitdiagramm. Die Abszisse bildet erneut die Zeit t in Stunden ab. Die Ordinate bildet den Strom I über die Steckverbindung 2 in Ampere ab. Wie in Fig. 2B ersichtlich, werden bei dieser Variante mehrmals durchgehend zwei Stunden lang jeweils 16 A übertragen werden. Anschließend muss jedoch eine Übertragungspause 53 von einer Stunde eingehalten werden, um die Steckverbindung 2 zu schonen. Bei dieser Variante kann in zwei Stunden bei einer Spannung von 230 V eine Energie E von 7,36 kWh übertragen werden. Nachteiligerweise muss die

Übertragungspause von einer Stunde, in der keine Energie E übertragen werden kann, zwingend eingehalten werden, sodass die Flexibilität bei der Energieübertragung über die Steckverbindung 2 erheblich eingeschränkt ist.

Um die Übertragungspause, wie in Fig. 2B abgebildet, zu vermeiden und bei Bedarf dennoch zumindest kurzfristig mehr elektrischen Strom I übertragen zu können, als dies der Variante gemäß Fig. 2A möglich ist, sieht das erfindungsgemäße Verfahren folgende Schritte vor:
i) Übertragen der elektrischen Energie E an den Verbraucher 1 über die Steckverbindung 2;
ii) Erfassen der elektrischen Energie E, die während eines mit der Zeit fortschreitenden Erfassungszeitfensters 14 über die Steckverbindung 2 an den Verbraucher 1 übertragen wird; und
iii) Anpassen, insbesondere Steuern und/oder Regeln einer elektrischen Größe, beispielsweise des elektrischen Stromes I, gemäß einer Sollvorgabe R während eines an das Erfassungszeitfenster 14 vorzugsweise anschließenden Regulierungszeitfensters 15, wobei die Sollvorgabe R in dem Regulierungszeitfensters 15 derart eingestellt wird, dass die während eines insbesondere mit der Zeit t fortschreitenden Beobachtungszeitfensters 16 übertragene elektrische Energie E höchstens einer vorgegebenen maximalen elektrischen Gesamtenergie Eₘₐₓ entspricht.

Vorteilhafterweise kann mit dem erfindungsgemäßen Verfahren eine zeitliche Energieübertragungsbegrenzung, wie sie bei Schutzkontaktsteckdosen vorgesehen ist, eingehalten werden. Zugleich können aber die Grenzwerte für elektrische Größen besser ausgenutzt und die Flexibilität hinsichtlich der Energieübertragung erhöht werden.

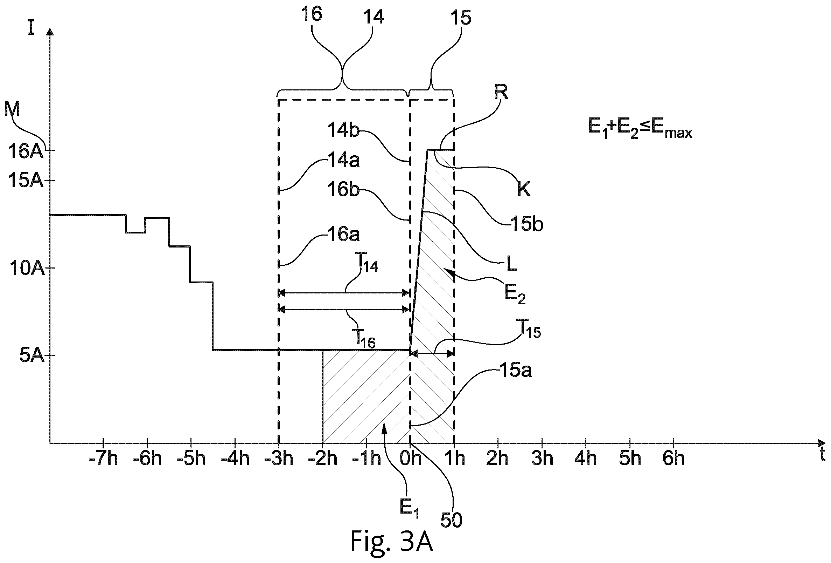

Fig. 3A zeigt eine Ausführungsform des erfindungsgemäßen Verfahrens in einem Zeitdiagramm. Die Abszisse beschreibt die Zeit t in Stunden. Die Ordinate beschreibt den Strom I über die Steckverbindung 2 in Ampere. Die Spannung U an der Steckverbindung 2 beträgt im Wesentlichen 230 V, sodass der übertragene Strom proportional zur übertragenen Energie E ist. Aus dem Strom I und der Spannung U lässt sich eine übertragene Leistung P sowie eine übertragene Energie E ableiten.

In Fig. 3A ist ein Erfassungszeitfenster 14 erkennbar, welches in der gezeigten Ausführungsform eine Zeitdauer T₁₄ aufweist und als Ganzes mit der Zeit t gleitet. Mit anderen Worten schreiten ein Anfang 14a und ein Ende 14b des Erfassungszeitfensters 14 gleichsam mit der Zeit t fort. Die Zeitdauer T₁₄ bleibt dadurch erhalten. Während des Erfassungszeitfensters 14 wird die übertragene Energie E erfasst, aufgezeichnet und gespeichert. Die Zeitdauer T₁₄ des Erfassungszeitfensters 14 beträgt in der gezeigten Ausführungsform im Wesentlichen 3 Stunden. Das Ende 14b des Erfassungszeitfensters 14 fällt in der gezeigten ausführungsform mit dem aktuellen Zeitpunkt 50 zusammen und schreitet mit diesem fort. Der aktuelle Zeitpunkt 50 wird in dem dargestellten Diagramm auf der Abszisse mit 0h bezeichnet. Das Erfassungszeitfenster 14 ist ein Zeitfenster, das mit Ausnahme des Endes 14b, das mit dem aktuellen Zeitpunkt 50 zusammenfällt, in der Vergangenheit liegt. Bei einer alternativen, nicht dargestellten Ausführungsform der Erfindung, kann auch vorgesehen sein, dass nur das Ende 14b des Erfassungszeitfensters 14 mit der Zeit t fortschreitet, während der Anfang 14a des Erfassungszeitfensters 14 zeitlich fixiert bleibt. Dadurch wächst das Erfassungszeitfenster 14 mit der Zeit t an. Dies kann insbesondere zu Beginn des Verfahrens der Fall sein, wenn das Verfahren gestartet wird und sich das Erfassungszeitfenster 14 erst mit der Zeit t aufbaut. Denkbar ist aber auch, dass das Erfassungszeitfenster 14 dauerhaft mit der Zeit t anwächst, also alle Energiewerte seit Beginn des Verfahrens aufzeichnet und speichert.

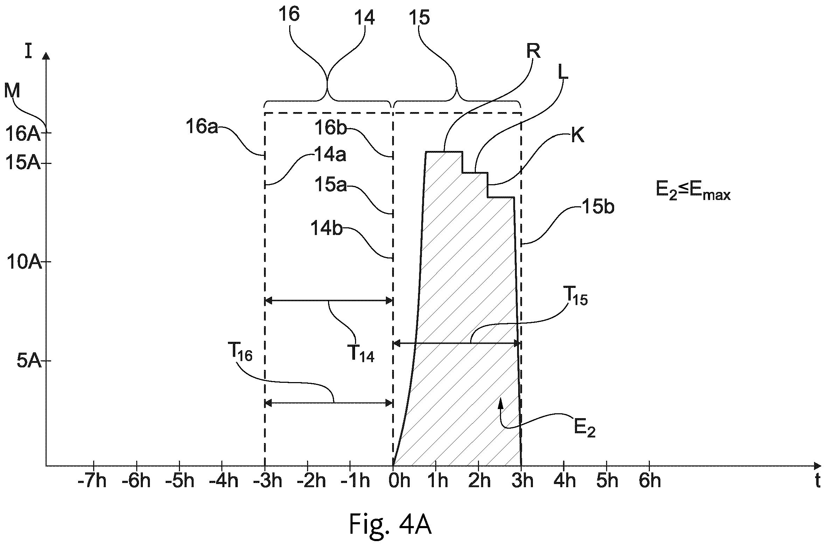

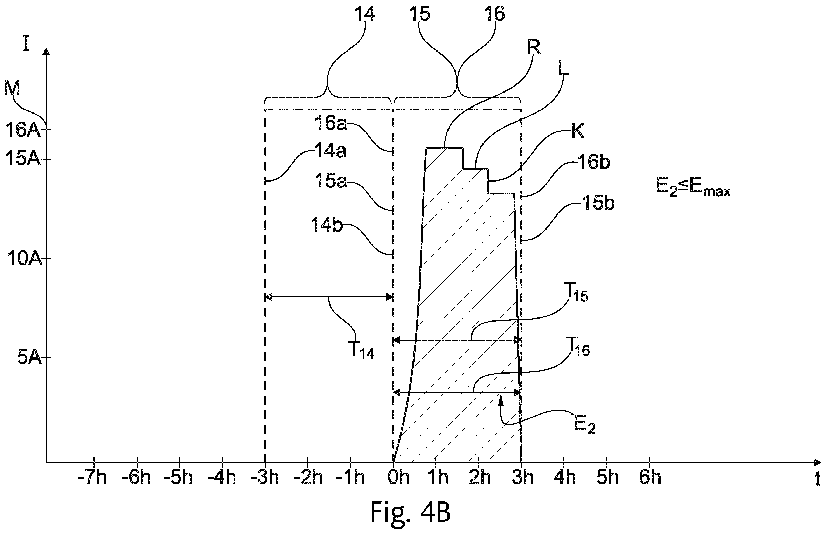

In Fig. 3A ist weiters ein mit der Zeit t fortschreitendes Regulierungszeitfenster 15 erkennbar, dessen Anfang 15a mit dem Ende des 14b des Erfassungszeitfensters 14 und somit auch mit dem aktuellen, mit der Zeit t fortschreitenden Zeitpunkt 50 zusammenfällt. Ein Ende des Regulierungszeitfensters 15b liegt in der Zukunft. Das Regulierungszeitfenster 15 gleitet vorzugsweise mit der Zeit. Das Regulierungszeitfenster 15 ist ein Zeitfenster, das mit Ausnahme des Anfangs 15a in der Zukunft liegt. Das Regulierungszeitfenster 15 hat in der gezeigten Darstellung eine Zeitdauer T₁₅ von einer Stunde. Die Zeitdauer T₁₅ ist vorzugsweise variabel einstellbar und insbesondere während des Verfahrens anpassbar. Dies ist beispielsweise während Übergangsphasen, in denen zuletzt wenig oder gar keine Energie E über die Steckverbindung 2 übertragen wurde, vorteilhaft. Insbesondere, wenn seit längerer Zeit keine Energie E an der Steckverbindung 2 übertragen wurde, kann weiter in die Zukunft geplant werden und das Regulierungszeitfenster 15 beispielsweise bis auf drei Stunden verlängert werden. Die Zeitdauer T₁₅ des Regulierungszeitfensters 15 kann bevorzugt in Abhängigkeit von der in dem Erfassungszeitfenster 14 übertragenen Energie E gewählt werden, wie weiter unten noch in Zusammenhang mit Fig. 4A und Fig. 4B gezeigt werden wird. In dem Regulierungszeitfenster 15 kann die Sollvorgabe R für eine elektrische Größe, beispielsweise für den Strom I, für den Ladestrom I_{L} oder die Ladespannung U_{L} festgelegt werden. In der gezeigten Ausführungsform wird zum Zwecke der besseren Übersicht die Sollvorgabe R für den Strom I durch die Steckverbindung 2 vorgegeben. Wenn der Verbraucher 1 ein Energiespeicher 5 ist, wird jedoch bevorzugt der Ladestrom I_{L} und/oder die Ladespannung U_{L} gemäß einer Sollvorgabe R angepasst, welche mit dem Strom I durch die Steckverbindung 2 in Verbindung stehen und diese sowie die übertragene Energie E beeinflussen. Bei der Sollvorgabe R kann es sich um eine zeitliche Sollkurve K handeln. Mit anderen Worten wird in dem Regulierungszeitfenster 15 mit der Sollvorgabe R der künftige Verlauf der elektrischen Größe festgelegt. Die elektrische Größe kann dabei direkt oder indirekt angepasst, insbesondere geregelt und/oder gesteuert, werden. Eine indirekte Steuerung und/oder Regelung ergibt sich zum Beispiel durch Anpassen einer mit der elektrischen Größe in Verbindung stehenden weiteren elektrischen Größe. Die Sollvorgabe R wird derart eingestellt, dass die während eines insbesondere mit der Zeit fortschreitenden Beobachtungszeitfensters 16 übertragene elektrische Energie E höchstens einer vorgegebenen maximalen elektrischen Gesamtenergie Eₘₐₓ entspricht. Mit anderen Worten wird die Sollvorgabe R derart eingestellt, dass die während des unten noch näher zu beschreibenden Beobachtungszeitfensters 16 übertragene elektrische Energie E eine vorgegebene maximale elektrische Gesamtenergie Eₘₐₓ nicht überschreitet. Beispielsweise kann die elektrische Größe reduziert oder gar zu Null gemacht werden, um ein Überschreiten der vorgegebene maximale elektrische Gesamtenergie Eₘₐₓ zu vermeiden. Mit der Sollvorgabe R kann der zukünftige Verlauf der elektrischen Größe geplant werden, jedoch unter der Bedingung, dass die übertragene elektrische Energie in dem Beobachtungsfenster 16 die vorgegebene maximale elektrische Gesamtenergie Eₘₐₓ nicht überschreitet. Die elektrische Größe steht somit in Zusammenhang mit der übertragenen elektrischen Energie E. Die Sollvorgabe R kann dabei durch zumindest einen Parameter P des Verbrauchers 1 beeinflusst werden. Beispielsweise kann die Sollvorgabe R an eine Ladekurve L eines Energiespeichers 5, die durch zumindest einen Parameter P bestimmt ist, angepasst werden. Wenn jedoch die Anpassung an die Ladekurve L dazu führen würde, dass die vorgegebene maximale elektrische Gesamtenergie Eₘₐₓ in dem Beobachtungszeitfenster 16 überschritten würde, kann die elektrische Größe, beispielsweise der Strom I durch die Steckverbindung 2, der Ladestrom I_{L} oder die Ladespannung U_{L}, entsprechenden reduziert werden. Die Ladekurve L kann jedoch weiterhin durch die Sollvorgabe R, soweit dies die vorgegebene maximale elektrische Gesamtenergie Eₘₐₓ zulässt, angenähert werden. Wenn der Verbraucher 1 ein Energiespeicher 5 ist, kann über die Datenkommunikationsverbindung 54 weiters ein Ladezustand eines Energiespeichers 5 ausgelesenen und die Restladezeit bestimmt werden. Dadurch kann ein Ladevorgang des Energiespeichers 5 noch besser an den Energiespeicher 5 angepasst werden. Vorzugsweise gleiten das Erfassungszeitfenster 14, das Regulierungszeitfenster 15 und das Beobachtungszeitfenster 16 mit der Zeit t.

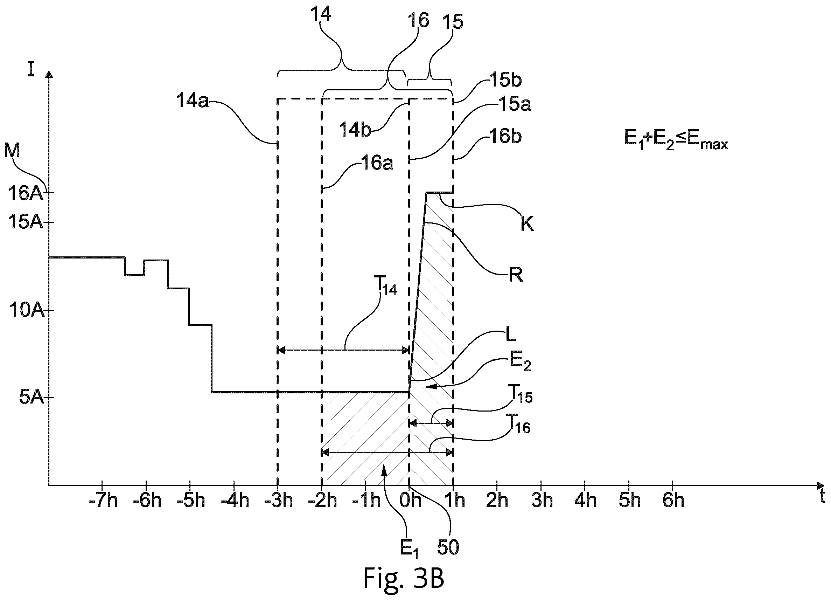

Die Bedingung, dass die während des Beobachtungszeitfensters 16 übertragene elektrische Energie E eine vorgegebene maximale elektrische Gesamtenergie Eₘₐₓ nicht überschreitet, ist vorzugsweise zu jedem Zeitpunkt während des erfindungsgemäßen Verfahrens zu erfüllen. Das mit der Zeit fortschreitende Beobachtungsfenster 16 kann somit in jeder beliebigen zeitlichen Relation zum aktuellen Zeitpunkt 50 bzw. zum Erfassungszeitfenster 14 oder zum Regulierungszeitfenster 15, angeordnet sein. Ob das Beobachtungszeitfenster 16 zumindest teilweise oder gar vollständig in der Zukunft oder in der Vergangenheit liegt, ist für die Erfindung unerheblich und lediglich für die konkrete Umsetzung einer bestimmten Ausführungsform der Erfindung von Bedeutung. Erfindungsrelevant ist nur, dass zu allen Zeiten während der Ausführung des Verfahrens die Bedingung erfüllt ist, dass die während des Beobachtungszeitfensters 16 übertragene elektrische Energie E die vorgegebene maximale elektrische Gesamtenergie Eₘₐₓ nicht überschreitet. Das Beobachtungszeitfenster 16 kann zeitlich beliebig in Relation zum aktuellen Zeitpunkt 50 angeordnet sein und insbesondere mit der Zeit t gleiten. Um die genannte Bedingung zu erfüllen, wird in dem Regulierungszeitfenster 15 die Sollvorgabe R derart vorgegeben bzw. geplant, dass die beschriebene Bedingung zu allen künftigen Zeitpunkten erfüllt ist. Zu diesem Zweck können für die Planung der Sollvorgabe R die während des Erfassungszeitfensters 14 bereits erfassten Werte der elektrischen Energie E berücksichtigt werden. Auf Grundlage des physikalischen Zusammenhangs zwischen der elektrischen Größe, für die die Sollvorgabe R vorgegeben wird, und der elektrischen Energie E kann die Sollvorgabe R derart eingestellt werden, dass für alle möglichen zeitlichen Anordnungen des Beobachtungszeitfensters 16 während des erfindungsgemäßen Verfahrens die oben genannte Bedingung erfüllt bleibt. Bei einer konkreten, besonders bevorzugten Umsetzung der Erfindung kann ein Ende 16b des Beobachtungszeitfensters 16 mit dem Ende 15a des Regulierungszeitfenster 15 zusammenfallen (siehe Fig. 3B) und mit diesem fortschreiten. Bei einer alternativen Umsetzung der Erfindung fällt das Ende 16b des Beobachtungszeitfensters 16 mit dem aktuellen Zeitpunkt 50 zusammen und schreitet mit der Zeit t fort (siehe Fig. 3A). Besonders günstig ist, wenn eine Zeitdauer T₁₆ des Beobachtungszeitfenster 16 drei Stunden lang ist. In diesem Fall kann auch der Anfang 16a des Beobachtungszeitfensters 16 mit dem Anfang 14a des Erfassungszeitfenster 14 zusammenfallen, wie in Fig. 3A gezeigt.

Die vorgegebene maximalen elektrischen Gesamtenergie beträgt vorzugsweise 7360 Wh. In der gezeigten Ausführungsform beträgt die Zeitdauer T₁₆ des Beobachtungszeitfensters 16 drei Stunden. Die Sollvorgabe R wird bei der Ausführungsform gemäß Fig. 3A in dem Regulierungszeitfensters 15 derart eingestellt, dass in dem später vorbeigleitenden Beobachtungszeitfenster 16 die vorgegebene maximale elektrische Gesamtenergie Eₘₐₓ nicht überschritten werden wird.

In Fig. 3A ist erkennbar, dass das Erfassungszeitfenster 14 mit dem Beobachtungszeitfenster 16 zusammenfällt. Direkt an das Erfassungszeitfenster 14 bzw. an das Beobachtungszeitfenster 16 schließt das Regulierungszeitfenster 15 mit einer Zeitdauer T₁₅ von einer Stunde an. Es wird angenommen, dass zum aktuellen Zeitpunkt 50, dem in Fig. 3A die Stunde 0h zugewiesen ist, ein Verbraucher 1, insbesondere ein Energiespeicher 5, angeschlossen wird, der mit möglichst viel Leistung P und Energie E versorgt werden soll. Da in dem Beobachtungszeitfenster 16 bzw. dem Erfassungszeitfenster 14 in den letzten zwei Stunden nur wenig elektrischer Strom I in der Höhe von 5 A und damit wenig Energie E, nämlich E₁ = 2300 Wh, über die Steckverbindung 2 übertragen wurde, ist es möglich, in dem einstündigen Regulierungszeitfenster 15 die Sollvorgabe R derart einzustellen, dass 16 A übertragen werden. In dem Regulierungszeitfenster 15 wird künftig somit eine Energie von E₂ = 3680 Wh verbraucht werden. Die Sollvorgabe R kann dabei auch einen Maximalwert M berücksichtigen. Diese kann beispielsweise 16 A betragen. Wenn das Beobachtungszeitfenster 16 später über diesen Zeitraum gleitet, der das Regulierungszeitfenster 15 an der aktuellen Stelle sowie die vergangenen zwei Stunden umfasst, werden also in Summe 2300 Wh + 3680 Wh = 5980 Wh innerhalb des Beobachtungszeitfensters 16 und damit weniger als 7360 Wh verbraucht worden sein werden. Da das Regulierungszeitfenster 15 mit der Zeit t verschoben wird, werden laufend derartige Planungen bzw. Anpassungen der Sollvorgabe R vorgenommen werden.

Fig. 3B zeigt die gleiche Situation wie in Fig. 3A, nur mit dem Unterschied, dass das Ende 16b des Beobachtungszeitfensters 16 mit dem Ende des Regulierungszeitfensters 15b zusammenfällt.

Fig. 4A zeigt eine weitere Ausführungsform der Erfindung gemäß einem weiteren Zeitdiagramm. Erkennbar ist, dass innerhalb des Erfassungszeitfensters 14 kein Strom I und damit keine Energie E über die Steckverbindung 2 übertragen wurde. Aus diesem Grund kann das Regulierungszeitfenster 15 verlängert werden, um die Energieübertragung in weitere Zukunft zu planen. In der gezeigten Ausführungsform wird das Regulierungszeitfenster 15 auf eine Zeitdauer T₁₅ von drei Stunden verlängert und die Sollvorgabe R kontinuierlich gemäß einer Ladekurve L (als Sollkurve K) angepasst. Es ist auch möglich, dass die Zeitdauer T₁₅ des Regulierungszeitfensters 15 auf längere Zeit, also mehr als drei Stunden, ausgedehnt wird. Des Weiteren ist möglich, dass das Regulierungszeitfenster 15 unter Beibehaltung der Zeitdauer T₁₅ mit der Zeit t gleitet und stetig die Sollvorgabe R vorgibt. Die Sollvorgabe R kann dabei theoretisch, falls für den angeschlossenen Verbraucher 1 oder einen anderen Verbraucher 1 erforderlich, im Anschluss an das Ende 15b des dargestellten Regulierungszeitfensters 15 fortgeführt, beispielsweise auch dupliziert, werden.

Fig. 4B zeigt dieselbe Situation wie Fig. 4A, bei der jedoch das Ende 16b des Beobachtungszeitfensters 16 wiederum mit dem Ende 15 des Regulierungszeitfenster 15 zusammenfällt.

In Fig. 4A und Fig. 4B ist zudem erkennbar, dass die Sollvorgabe R nicht derart eingestellt wird, dass die maximal zulässige Energie Eₘₐₓ übertragen wird, sondern dass die Sollvorgabe R an zumindest einen Parameter P (siehe Fig. 1) des Verbrauchers 1 angepasst ist. Die zu übertragende Energie E₂ liegt dabei unterhalb von Eₘₐₓ. Der zumindest eine Parameter P definiert dabei in der gezeigten Darstellung eine Ladekurve L, an welche die Sollvorgabe R angepasst ist. Es ist somit zwar mit dem erfindungsgemäßen Verfahren möglich, aber nicht zwingend erforderlich, dass eine Energie- oder Leistungsmaximierung stattfindet. Der zumindest eine Parameter P kann dabei von dem Energiespeicher 5 mittels einer Datenkommunikation an das Ladegerät 4 übertragen werden.

## Patentansprüche

1. Verfahren zum Übertragen elektrischer Energie (E) an einen Verbraucher (1) über eine elektrische Steckverbindung (2) mit den Schritten:
i) Übertragen der elektrischen Energie (E) an den Verbraucher (1) über die Steckverbindung (2);
ii) Erfassen der elektrischen Energie (E), die während eines mit der Zeit fortschreitenden Erfassungszeitfensters (14) über die Steckverbindung (2) an den Verbraucher (1) übertragen wird; und
iii) Anpassen, insbesondere Steuern und/oder Regeln, einer elektrischen Größe, beispielsweise eines elektrischen Stromes (I), der über die Steckverbindung (2) fließt, gemäß einer Sollvorgabe (R) während eines an das Erfassungszeitfenster (14) vorzugsweise anschließenden Regulierungszeitfensters (15), wobei die Sollvorgabe (R) in dem Regulierungszeitfensters (15) derart eingestellt wird, dass die während eines insbesondere mit der Zeit fortschreitenden Beobachtungszeitfensters (16) übertragene elektrische Energie (E) höchstens einer vorgegebenen maximalen elektrischen Gesamtenergie (Eₘₐₓ) entspricht.

2. Verfahren nach Anspruch 1, wobei eine Zeitdauer (T₁₆) des Beobachtungszeitfensters (16) zwischen 2 Stunden und 4 Stunden, insbesondere im Wesentlichen 3 Stunden, beträgt.

3. Verfahren nach Anspruch 1 oder 2, wobei das Beobachtungszeitfenster (16) mit dem Erfassungszeitfenster (14) zusammenfällt, insbesondere dem Erfassungszeitfenster (14) entspricht.

4. Verfahren nach einem der Ansprüche 1 bis 3, wobei eine Zeitdauer (T₁₄) des Erfassungszeitfensters (14) zumindest 60 Minuten, vorzugsweise zumindest 120 Minuten oder zumindest 180 Minuten, beträgt.

5. Verfahren nach einem der Ansprüche 1 bis 4, wobei eine Zeitdauer (T₁₅) des Regulierungszeitfensters (15) variabel einstellbar ist.

6. Verfahren nach einem der Ansprüche 1 bis 5, wobei eine Zeitdauer (T₁₅) des Regulierungszeitfensters (15) zwischen 0 Minuten und 180 Minuten, vorzugsweise zwischen 30 Minuten und 90 Minuten oder zwischen 45 Minuten und 75 Minuten, insbesondere im Wesentlichen 60 Minuten, beträgt.

7. Verfahren nach einem der Ansprüche 1 bis 6, wobei die Sollvorgabe (R) eine zeitliche Sollkurve (K) ist, welche vorzugsweise durch zumindest einen elektrischen Parameter (P) bestimmt ist, welcher Parameter (P) insbesondere durch den Verbraucher (1) vorgegeben ist.

8. Verfahren nach einem der Ansprüche 1 bis 7, wobei die vorgegebene maximale elektrische Gesamtenergiemenge (Eₘₐₓ) zwischen 6000 Wh und 9000 Wh, vorzugsweise zwischen 6500 Wh und 8000 Wh oder zwischen 7200 Wh und 7500 Wh, insbesondere im Wesentlichen 7360 Wh, beträgt.

9. Verfahren nach einem der Ansprüche 1 bis 8, wobei die Sollvorgabe (R) höchstens einen vorgegebenen Maximalwert (M) annimmt, vorzugsweise wobei die elektrische Größe ein elektrischer Strom (I) durch die Steckverbindung (2) ist und der vorgegebene Maximalwert (M) insbesondere im Wesentlichen zwischen 10 Ampere und 16 Ampere beträgt.

10. Verfahren nach einem der Ansprüche 1 bis 9, wobei die während des Regulierungszeitfensters (15) an den Verbraucher (1) übertragene elektrische Energie (E) und/oder eine elektrische Leistung (P) maximiert wird.

11. Verfahren nach einem der Ansprüche 1 bis 10, wobei der Verbraucher (1) ein Energiespeicher (5), insbesondere ein Lithium-Ionen Akkumulator (5a), ist und die Sollvorgabe (R), insbesondere eine Sollkurve (K), derart eingestellt wird, dass sie sich einer vorgegebenen Ladekurve (L) zur Ladung des Energiespeichers (5) annähert, insbesondere dieser im Wesentlichen entspricht.

12. Verfahren nach einem der Ansprüche 1 bis 11, wobei der Verbraucher (1) ein Energiespeicher (5), insbesondere ein Lithium-Ionen Akkumulator (5a), ist und ein Ladeplan zur Ladung des Energiespeichers (5) erstellt wird, gemäß dem die Sollvorgabe (R) eingestellt wird.

13. Verfahren zum Laden eines Energiespeichers (5), insbesondere eines Energiespeichers (5) eines Fahrzeugs, bei dem der Energiespeicher (5) über eine Steckverbindung (2) mit elektrischer Energie (E) geladen wird, wobei das Verfahren zum Übertragen elektrischer Energie (E) an einen Verbraucher (1) über eine Steckverbindung (2) gemäß einem der Ansprüche 1 bis 12 eingesetzt wird.

14. Vorrichtung (51) zum Übertragen elektrischer Energie (E) an einen Verbraucher (1), wobei die Vorrichtung (51) über eine Steckverbindung (2) mit einem übergeordneten Energieversorgungsnetz (3) verbindbar ist und folgendes aufweist:
eine Erfassungseinheit (12), welche dazu eingerichtet ist, die elektrischen Energie (E) zu erfassen, die während eines mit der Zeit gleitenden Erfassungszeitfensters (14) an der Steckverbindung (2) übertragen wird;
eine Regulierungseinheit (52), insbesondere eine Steuerungs- und/oder Regelungseinheit, welche dazu eingerichtet ist, eine elektrische Größe, beispielsweise einen elektrischen Strom (I), der über die Steckverbindung (2) fließt, gemäß einer Sollvorgabe (R) während eines an das Erfassungszeitfenster (14) anschließenden Regulierungszeitfensters (15) anzupassen, insbesondere zu steuern und/oder regeln, wobei die Steuerungs- und/oder Regelungseinheit (52) weiters dazu eingerichtet ist, die Sollvorgabe (R) in dem Regulierungszeitfensters (15) derart einzustellen, dass die während eines insbesondere mit der Zeit fortschreitenden Beobachtungszeitfensters (16) übertragene elektrische Energie (E) höchstens einer vorgegebenen maximalen elektrischen Gesamtenergie (Eₘₐₓ) entspricht.

15. Vorrichtung (8) nach Anspruch 13, wobei die Vorrichtung (51) als Ladegerät (4) zum Laden eines Energiespeichers (5), insbesondere eines Energiespeichers in einem Fahrzeug, ausgebildet ist.
